# EUROPÄISCHE PATENTSCHRIFT

(11) **EP 4 166 640 B1**
(45) Veröffentlichungstag und Bekanntmachung des Hinweises auf die Patenterteilung: **21.05.2025**
(21) Anmeldenummer: 22201127.2
(22) Anmeldetag: 12.10.2022
(51) Int. Cl.: C12C 1/18, C12C 1/16, C12C 1/02, C12C 1/027, A23L 7/20, C12C 1/067

(54) **VERFAHREN ZUR HERSTELLUNG VON MALZ**
PROCESS FOR PRODUCING MALT
PROCEDE DE PRODUCTION DE MALT

(30) Priorität: 12.10.2021 DE 102021126352
(43) Veröffentlichungstag der Anmeldung: 19.04.2023
(73) Patentinhaber: Malzfabrik Rheinpfalz GmbH, 64319 Pfungstadt (DE)
(72) Erfinder: Leisler, Christian, 64646 Heppenheim (DE)
(74) Vertreter: Stoffregen, Hans-Herbert

(56) Entgegenhaltungen:
- DE-B- 1 204 171
- BELGOMALT: "Belgomalt Creative Series - Summer Infusion Teaser", 25 August 2021 (2021-08-25), XP093023506, Retrieved from the Internet <URL:https://www.youtube.com/watch?v=TUMlwS7KqDQ> [retrieved on 20230214]
- D. E. BRIGGS ET AL: "Brewing: Science and Practice", 2004, XP055435010, Retrieved from the Internet <URL:http://fars.itvhe.ac.ir/_fars/Documents/99ae7cc8-c9a8-4356-8d24-f6c208322cb7.pdf> [retrieved on 20171213]
- ANONYMOUS: "Malting - Wikipedia", 20 February 2021 (2021-02-20), pages 1 - 5, XP093023790, Retrieved from the Internet <URL:https://en.wikipedia.org/w/index.php?title=Malting&oldid=1007898344> [retrieved on 20230214]

## Beschreibung

Die Erfindung bezieht sich auf ein Verfahren zur Herstellung von Malz aus Getreidekörnern, insbesondere Gerstenkörnern, umfassend zumindest die Verfahrensschritte Weichen, Keimen und Darren der Getreidekörner.

Gegenstand der Erfindung ist auch ein Verfahren zur Herstellung eines Getränks.

Bier-Mischgetränke erfreuen sich steigender Beliebtheit. Zur Herstellung wird grundsätzlich Bier mit einer aromatisierten Flüssigkeit, wie z.B. Zitronenlimonade, gemischt. Hierzu ist es erforderlich, dass für die zuzumischende Flüssigkeit eine gesonderte Abfüllanlage zur Verfügung gestellt wird, um die Haltbarkeit des Bieres nicht negativ zu beeinflussen.

Um ein Mischgetränk aus Hefeweizenbier herzustellen, ist es nach der DE 195 07 037 A1 bekannt, die Hefepilze des Weizenbieres zu inaktivieren, um einen erneuten Gärprozess durch das Hinzufügen der den gewünschten Geschmack liefernden Flüssigkeit aufgrund des in dieser vorhandenen Zuckers zu unterbinden.

Bei der Vermischung können auch ungewollte Substanzen, wie Zucker oder wilde Hefen, in das Produkt gelangen, die eine ungewollte Gärung oder andere Verderb-Prozesse auslösen können. Um dies zu verhindern, müssen die Produkte nach der Vermischung entweder durch einen Kurzzeiterhitzer oder in einem Pasteur behandelt werden. In beiden Fällen gilt die Abwägung je kürzer die Wärmebehandlung, desto höher das Risiko einer ungewollten erneuten Gärung, aber desto geringer der Verlust aromatischer Substanzen sowohl aus dem Malz als auch aus dem beigemischten Grundstoff.

Das Zumischen von Aromen bereitet das Problem, da diese Eiweißverbindungen enthalten, die nicht wärmestabil sind, so dass ein entsprechendes Bier-Mischgetränk nicht im erforderlichen Umfang haltbar wäre.

Um ein Bier zu aromatisieren, werden nach der DE 10 2018 291 558 A1 gedarrte Malzbestandteile verwendet, die beim Darren einem Rauch ausgesetzt worden sind.

Der DE 12 04 171 A1 ist ein Verfahren zur Herstellung von Sauermalz zu entnehmen, durch das die Aromaeigenschaften von Malz im Bier betont werden. Dabei wird saure Tränkflüssigkeit dem Grünmalz zugeführt. Nach dem Tränken wird Säure abgezogen und das normale Darren durchgeführt.

Aus dem Dokument D. E. Briggs et al. "Brewing: Science and Practice" ist ein Malz bekannt, das mit Gewürz und Orangen durchzogen ist.

Der vorliegenden Erfindung liegt die Aufgabe zugrunde, ein Verfahren zur Herstellung von Malz sowie einem Getränk zur Verfügung zu stellen, das im gewünschten Umfang aromatisiert ist. Aromatisiert bedeutet dabei, dass ein Geschmack erzeugbar ist, der insbesondere ein Obst- und/oder Gewürzaroma besitzt. Dabei soll sichergestellt werden, dass durch die Aromatisierung das hergestellte Getränk zumindest bezüglich der Haltbarkeit gleiche Eigenschaften wie ein solches aufweist, das ein entsprechendes Aroma nicht besitzt.

Die Grundeigenschaften des aromatisierten Getränks, insbesondere Bier, soll nicht oder im Wesentlichen nicht verändert werden.

Zur Lösung einer der Aufgaben wird ein Verfahren zur Herstellung von Malz vorgeschlagen, das sich im Wesentlichen dadurch auszeichnet, dass die gekeimten Getreidekörner angetrocknet werden, wobei die gekeimten Getreidekörner in der Antrocknung auf einen Weichgrad W° mit W° ≤ 26 % eingestellt werden, anschließend in einer aromatisierten Flüssigkeit geweicht und sodann gedarrt werden.

Das Antrocknen nach dem Keimen kann auch als Zwischentrocknen und das anschließende Weichen in der aromatisierten Flüssigkeit als Nachweichen bezeichnet werden.

Überraschenderweise hat sich gezeigt, dass dann, wenn die Getreidekörner vor dem Darren und nach dem Keimen angetrocknet und sodann erneut geweicht werden, und zwar in einer aromatisierten Flüssigkeit, d.h. Wasser und einem Aromaträger, und anschließend gedarrt werden, in dem fertigen Malz in einem Umfang Aromastoffe enthalten sind, dass bei der weiteren Verarbeitung, wie einem Brauprozess, das Aroma an die Flüssigkeit abgegeben wird, so dass das Getränk das gewünschte Aroma besitzt.

Dadurch, dass nach dem Keimen das Aromatisieren des vorliegenden Grünmalzes erfolgt, kann die Aromalösung, die als Aromaweichlösung wirkt, im hirneichenden Umfang in den Mehlkörper eindringen, wobei zuvor ein Antrocknen des Grünmalzes erfolgt, um den Wassergehalt zu reduzieren. Hierdurch wird die nachfolgende Aromaweiche optimiert. Die Wurzelkeime sollten dabei gut erhalten bleiben, damit die Aromaweichlösung in das Korn gut eingezogen werden kann; denn die Wurzelkeime saugen Feuchtigkeit schnell auf.

Die Erfindung zeichnet sich dadurch aus, dass die Getreidekörner in Form von gekeimten Getreidekörnern der aromatisierten Flüssigkeit ausgesetzt werden, in der ein Weichen erfolgt. Zuvor erfolgt ein Antrocknen der gekeimten Getreidekörner, um nach dem Weichen in der aromatisierten Flüssigkeit den Darrprozess durchzuführen.

Insbesondere ist vorgesehen, dass die Getreidekörner während des Keimens auf einen Weichgrad W° mit 40 % < W° ≤ 45 %, insbesondere 41 % ≤ W° ≤ 44 %, bevorzugterweise 42 % ≤ W° ≤ 44 % eingestellt werden.

Des Weiteren sollten die gekeimten Getreidekörner beim Antrocknen auf einen Weichgrad W° mit W° ≤ 22 % eingestellt werden. Vorzugsweise sollte der Weichgrad W° betragen 18 % ≤ W° ≤ 25 %.

Das Antrocknen der gekeimten Getreidekörner sollte dann durchgeführt werden, wenn der Keimprozess dem Grunde nach bzw. im Wesentlichen abgeschlossen ist, insbesondere nachdem die Getreidekörner d Tage gekeimt haben mit d ≥ 4, bevorzugterweise d = 5.

Auch zeichnet sich die Erfindung insbesondere dadurch aus, dass die gekeimten Getreidekörner der aromatisierten Lösung ausgesetzt werden, wenn der Eiweißlösungsgrad im Bereich 41 % und 45 % liegt. Der Eiweißlösungsgrad setzt die durch die Keimung in Lösung gebrachten Stickstoffverbindungen mit dem Gesamtstickstoffgehalt des Malzes ins Verhältnis (siehe Analysenvorschriften MEBAK Band Rohstoffe, Version 2016-3, Analyse R-205.12.999).

Das Antrocknen selbst sollte über eine Zeit t mit 9 h ≤ t ≤ 13 h, insbesondere 10 h ≤ t ≤ 11 h, bei vorzugsweise einer Temperatur T mit 38 °C ≤ T ≤ 42 °C, insbesondere T = 40 °C oder T ≈ 40 °C durchgeführt werden.

Insbesondere ist vorgesehen, dass das Weichen in der aromatisierten Lösung (Nachweichen) bei insbesondere Raumtemperatur, vorzugsweise im Bereich von 18 °C bis 24 °C, durchgeführt wird, wobei das Weichen über eine Zeit t mit 1 h ≤ t ≤ 12 h, insbesondere 4 h ≤ t ≤ 8 h, besonders bevorzugt 5 h ≤ t ≤ 7 h, erfolgt.

Der Weichgrad W° nach dem Nachweichen sollte zwischen 40 % und 45 %, insbesondere zwischen 41 % und 44 %, bevorzugterweise zwischen 42 % und 44 % liegen.

Als aromatisierte Flüssigkeit kommt insbesondere eine Mischung von Wasser mit einem Aroma aus der Gruppe Früchte, insbesondere Obst, und/oder Gewürze in Frage.

Bevorzugterweise kann der Aromastoff als Essenz oder Saft dem Wasser zugegeben werden. Als Obstaroma sind insbesondere Grapefruit, Zitrone, Limone, Orange, Aprikose, Mandarine, Apfel, Ananas, Johannisbeere, Holunderblüten zu nennen. Als Gewürzaroma kommen bevorzugterweise Kardamom, Piment oder Nelke in Frage.

Insbesondere ist die Erfindung gekennzeichnet durch die Verfahrensschritte:
- Weichen,
- Keimen,
- Antrocknen der gekeimten Getreidekörner bis zu einem Weichgrad W° mit W° ≤ 26 %, vorzugsweise 18° ≤ W° ≤ 25°,
- Weichen in einer aromatisierten Flüssigkeit mit zumindest einem Aroma, wie Früchte- und/oder Gewürzaroma,
- Darren
- Entkeimung.

Die Erfindung bezieht sich auch auf ein Getränks, bei dessen Herstellung ein Malz verwendet wird, das entsprechend der erfindungsgemäßen Lehre aromatisiert ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung.

Es zeigen:
- Fig. 1: einen Verfahrensablauf zur Herstellung von aromatisiertem Malz und
- Fig. 2: ein Analyseschema.

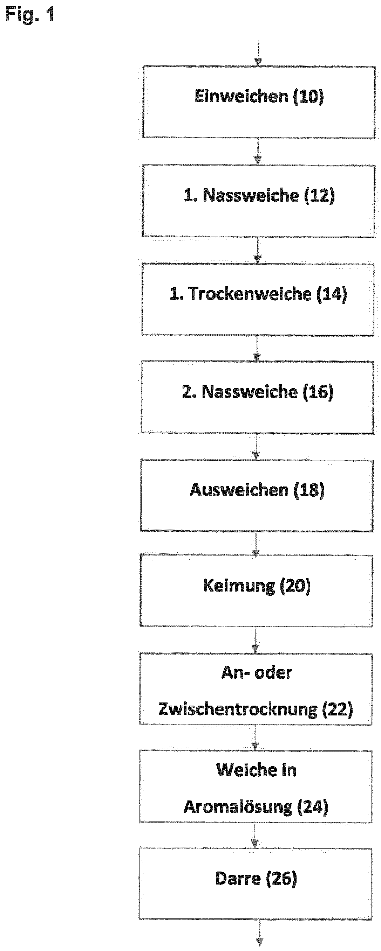

Anhand der Fig. 1 soll das erfindungsgemäße Verfahren, das Mälzen, zur Herstellung von aromatisierten Malz erläutert werden. Dabei wird das Verfahren anhand von Gerste als Getreide erläutert, wenngleich ein Aromatisieren von Malz anderer Getreidesorten entsprechend der erfindungsgemäßen Lehre erfolgen kann, wie Weizen, Dinkel, Roggen oder auch Mais. Insbesondere gelangt jedoch das erfindungsgemäße Verfahren zur Herstellung von für das Brauen benötigtem Malz zur Anwendung.

So wird in einem ersten Verfahrensschritt 10 gereinigte Gerste mit Wasser vermengt (Einweichen). Dies erfolgt in einem Weichhaus, bei dem es sich um einen siloartigen Behälter handeln kann.

In dem Verfahrensschritt 12 wird die Gerste sodann unter Zufuhr von Luft geweicht. Dieser Verfahrensschritt stellt eine erste Nassweiche dar, die über einen Zeitraum von ca. 6 bis 8 Stunden erfolgen kann. Nach der ersten Nassweiche sollte der Wassergehalt, also der Weichgrad der Gerstenkörner zwischen 30 % und 33 % liegen.

In einem nachfolgenden Verfahrensschritt 14 wird in dem Weichhaus der Schritt Trockenweiche durchgeführt. Hierzu wird zuvor das Wasser aus dem Weichhaus abgelassen. Die Gerstenkörner liegen unter Abzug des entstehenden CO₂ in der Weiche und die Lebensvorgänge in den Körnern beginnen. Die erste Trockenweiche erstreckt sich über einen Zeitraum von vorzugsweise ca. 10 bis 14 Stunden.

An die erste Trockenweiche schließt sich eine zweite Nassweiche (Verfahrensschritt 16) an, bei der die Gerste erneut mit Wasser geflutet wird. Dabei liegt die Gerste vorzugsweise für ca. 3 bis 5 Stunden unter Wasser, um einen Weichgrad W° zwischen 42 % und 44 % zu erzielen.

Sodann erfolgt ein Ausweichen (Verfahrensschritt 18). Dabei wird das sogenannte Grünmalz (keimende Gerste) in die Keimkästen gefördert. Im Verfahrensschritt 20 liegt das Grünmalz im Keimkasten und die Keimung setzt sich fort. Unter Belüftung und täglichem Wenden werden die Körner vorzugsweise 5 Tage kontrolliert gekeimt. Dabei kann der Weichgrad durch Wasserspritzen während einem Wendevorgang entsprechend den Anforderungen angepasst werden. Bei der Keimung im Keimkasten sollte die Temperatur konstant zwischen 20 °C und 16 °C liegen.

Die Dauer der Keimung wird dadurch bestimmt, dass eine ausreichende Lösung des Korns erfolgt ist, d.h., dass Eiweiß in den Körnern in einem Umfang gelöst ist, dass sich ein Eiweißlösungsgrad im Bereich zwischen 41 % und 44 % ergibt. Der Eiweißlösungsgrad setzt die durch die Keimung in Lösung gebrachten Stickstoffverbindungen mit dem Gesamtstickstoffgehalt des Malzes in Verhältnis (siehe Analysenvorschriften MEBAK Band Rohstoffe, Version 2016-3, Analyse R-205.12.999). Dieser Eiweißlösungsgrad wird üblicherweise nach 5-tägiger Keimung erzielt, so dass ein hochgelöstes Grünmalz vorliegt.

Erfindungsgemäß erfolgt sodann gemäß Verfahrensschritt 22 ein An - oder Zwischentrocknen, bei dem die Gerstenkörner einer schonenden Trocknung bei in etwa 40 °C vorzugsweise über einen Zeitraum von 9 bis 13 Stunden derart getrocknet werden, dass sich ein Weichgrad W° im Bereich zwischen 18 % und 25 % ergibt. Dabei erfolgt das An- oder Zwischentrocknen derart, dass die Malzkeime erhalten bleiben. Werden diese Temperaturen überschritten, so besteht das Risiko, dass im Korn vorhandenen Enzyme geschädigt werden. Dies sollte aufgrund der späteren Brauprozesse vermieden werden.

Die entsprechenden einen Weichgrad im Bereich zwischen 18 % und 25 % aufweisenden Gerstenkörner werden sodann in einem Verfahrensschritt 24 in einer aromatisierten Flüssigkeit über einen Zeitraum von 1 h bis 12 h, vorzugsweise 4 h bis 8 h, besonders bevorzugt 5 h bis 7 h, vorzugsweise in etwa 6 h geweicht (h = Stunde). Dabei sollte die Temperatur im Bereich der Raumtemperatur, insbesondere im Bereich zwischen 18 °C und 24 °C liegen. Aufgrund des Weichgrads nach der An- oder Zwischentrocknung 22 können die Körner im erforderlichen Umfang aromatisierte Weichlösung, also insbesondere Wasser plus Aromaträger, aufnehmen, um sodann im Verfahrensschritt 26 das Darren durchzuführen, dass sich in die Verfahrensschritte Schwelken und Abdarren gliedert. Dabei wird das Grünmalz durch Wärme und einen hohen Luftstrom getrocknet.

Das Schwelken sollte über einen Zeitraum vorzugsweise zwischen 11 und 13 Stunden bei Temperaturen vorzugsweise zwischen 40 °C und 65 °C und das Abdarren oder Darren über einen Zeitraum vorzugsweise zwischen 7 und 9 Stunden bei einer Temperatur zwischen 55 °C und 85 °C, vorzugsweise von über 80 °C erfolgen, wobei die Höhe der Temperatur die Farbe des Malzes vorgibt.

Nach dem Darren sollte der Weichgrad, also der Wassergehalt, im Bereich 4 % bis 5 % liegen. Sodann werden durch Reibung die Malzkeime vom Darrmalz abgeschlagen, also die Entkeimung erfolgt.

Das entsprechende Malz kann sodann zum Brauen alkoholischer Getränke verwendet werden, die entsprechend der Aromaeinlagerung in dem Darrmalz aromatisiert sind.

Aufgrund der erfindungsgemäßen Lehre wird durch das Antrocknen (Verfahrensschritt 22) hochgelöstes Grünmalz zur Verfügung gestellt, das im nachfolgenden Verfahrensschritt 24 die Aromaweichlösung gut aufnehmen und einbauen kann. Lösung bezeichnet dabei den Grad des Abbaus von Stützsubstanzen im Mehlkörper, wobei vorrangig Eiweiß zu nennen ist, das eine starre Struktur im Korn bildet. Während der Keimung wird die Stützstruktur abgebaut, wodurch der Mehlkörper freigelegt wird. Damit die Aromaweiche optimal in den Mehlkörper eingesogen und eingebaut werden kann, ist auf eine weitgehende Lösung, also den Abbau von Stützsubstanzen zu achten.

Um dies zu erzielen, wirken mehrere Faktoren zusammen. So sollte nach der Nassweiche (Verfahrensschritt 16) der Weichgrad vorzugsweise zwischen 42 % und 44 % liegen, da der Weichgrad stark mit der in Lösung gebrachten Eiweißmenge und der Lösung korreliert. Des Weiteren sollte während der Keimung die Keimtemperatur durchgehend im oberen Bereich von vorzugsweise 18 °C bis 20 °C liegen. Das gewünschte hochgelöste Grünmalz, das nach vorzugsweise 5-tägiger Keimung zur Verfügung steht, wird sodann an- oder zwischengetrocknet, um den Wassergehalt auf 20 % bis 25 % zu reduzieren. Dabei erfolgt ein schonendes langsames Trocknen im Bereich von 40 °C über einen Zeitraum zwischen 9 und 13 Stunden.

Durch die schonende Trocknung soll erreicht werden, dass malzeigene Enzyme nicht beschädigt werden und die Wurzelkeime erhalten bleiben. Die Enzyme sind elementar wichtig für die Weiterverarbeitung in der Brauerei und müssen zu einem Großteil erhalten bleiben.

Die Wurzelkeime sollten möglichst gut erhalten bleiben, damit die Aromaweichlösung noch besser in das Korn eingezogen werden kann; denn die Wurzelkeime dienen dem Korn als erste Wurzelsysteme, die Feuchtigkeit sehr gut und schnell aufsaugen können.

Das Weichen in der Aromalösung erfolgt vorzugsweise über einen Zeitraum von 1 h bis 12 h, vorzugsweise 4 h bis 8 h, besonders bevorzugt 5 h bis 7 h, vorzugsweise in etwa 6 h, damit möglichst viel Aromaweichlösung in den Mehlkörper gelangt und sich die Aromen im Korn lösen und einbauen können. Anschließend wird das Grünmalz auf die Darre gefördert und nach üblichem Standardverfahren getrocknet.

Die Aromalösungen enthalten insbesondere Obst- und/oder Gewürzaromen, wobei Wasser mit Aromaessenz oder Aromaflüssigkeit gemischt wird. Als Obstaromen sind insbesondere Grapefruit, Zitrone, Limone, Orange, Aprikose, Mandarine, Apfel, Johannisbeere, Holunderblüten und als Gewürzaromen Kardamom, Chili, Piment und Nelke zu nennen.

Insbesondere ist vorgesehen, dass dann, wenn für die aromatisierte Lösung beim Weichen der angetrockneten gekeimten Getreidekörner ein Aromakonzentrat eingesetzt wird, die Konzentration 0,2 % bis 3 %, insbesondere im Bereich zwischen 0,5 % und 1,5 %, in dem Weichwasser beträgt. Ein Wert zwischen 0,5 % und 1,5 % liegt z.B. dann vor, wenn man als Konzentrat Schwarzes Johannisbeer Aroma der Produktnummer 2.01003, Version 4.0 der Döhler Group GFSRA, Darmstadt, verwendet. Wird Zitronenkonzentrat benutzt, wird niedriger dosiert, da Zitrone sehr intensiv ist. Demgegenüber müssen andere Geschmacksrichtungen intensiver dosiert werden, wie z.B. Apfel.

Anhand des nachfolgendem Beispiels wird eine Malz- und Aromabierrezeptur beschrieben, die die erfindungsgemäße Aromatisierung beinhaltet.

Es wurden 10 kg Einwaage Braugerste mit Wasser vermengt. Sodann erfolgte eine erste Nassweiche über einen Zeitraum zwischen 6 und 8 Stunden. Es schloss sich eine Trockenweiche zwischen 12 bis 14 Stunden an, bei der eine Belüftung erfolgt, wobei grundsätzlich fortwährend nach 1 min. Belüftung eine 5-minütige Pause durchgeführt wurde. Anschließend erfolgte die zweite Nassweiche über eine Zeit zwischen 4 und 5 Stunden. Nebenbedingung war, dass die Gesamtweichdauer ca. 24 Stunden betrug.

Nach dem Weichprozess schloss sich der Keimprozess über einen Zeitraum über 5 Tage an. Beim Keimen wurde eine Belüftung derart durchgeführt, dass fortwährend nach 10 min. Luftzufuhr 10 min. Pause erfolgte. Die Zulufttemperatur wurde auf eine Temperatur zwischen 19 °C und 16 °C eingestellt. Ein tägliches Wenden wurde durchgeführt, wobei ggf. Wasser zugeführt wurde. Der Zielweichgrad lag zwischen 42 % und 44 %. Sodann erfolgte das erfindungsgemäße Antrocknen über ein Zeitraum von ca. 11 Stunden bei einer Temperatur von 40 °C. Der erzielte Weichgrad betrug 20 %.

Eine Einwaage von 6 kg angetrocknetem Grünmalz wurde sodann in einer 1-%igen Johannisbeerlösung über 6 Stunden nachgeweicht. Hierzu wurden 80 ml 100%-Aroma mit 8 Litern Wasser gemischt. Die Temperatur wurde auf ca. 20 °C eingestellt.

Es schloss sich das Darrprogramm, also das Schwelken und Abdarren an, wobei folgende Temperaturen und Zeiträume gewählt wurden:
- 12 Stunden bei 45 °C
- 2 Stunden bei 55 °C
- 2 Stunden bei 60 °C
- 6 Stunden bei 82 °C
und sodann das Herunterfahren über
- 30 min bei 50 °C.

Von dem so erhaltenen Aromamalz wurden 4,3 kg Einwaage gebraut. Es erfolgten ein Einmaischen bei 60 °C und sodann Rastschritte:
- 30 min bei 62 °C
- 30 min bei 72 °C und
- 10 min bei 79 °C.

Nach einem Nachguss von 2 Litern erfolgte das Würzekochen über 60 min., 10 min nach Kochbeginn erfolgte die Hopfengabe.

Nach dem Brauprozess standen 20 Liter zur Verfügung, denen Hefe zugegeben wurde. Bei 12 °C erfolgte sodann eine Gärung in einem Gärbottich derart, dass sich Restextrakt von 4,0 % bis 4,5 % ergab. Das so hergestellte Jungbier wurde 4 Wochen bei 6 °C gelagert. Der CO₂-Gehalt wurde sodann auf 5,0 g/l eingestellt.

Entsprechende Versuche wurden mit unterschiedlichen Konzentrationen der Tränklösung, also des Aroma-Wasser-Gemisches und bei unterschiedlichen Weichgraden nach der Antrocknung durchgeführt. Dabei konnte festgestellt werden, dass der Aromamarker, bei Johannisbeere Ethyl-2-Methylbutanoate als Aromamarker, mit zunehmenden Weichgrad zunahm. Gleiches galt in Bezug auf die Konzentration der Tränklösung, d.h. je höher die Konzentration der Tränklösung, desto höher der Gehalt an Aromamarker.

Auch wurden Versuche mit Zitronen-, Holunderblüten- und Apfelaromen durchgeführt, wobei für Zitrone als Aromamarker 1,4 Cineol und Linalool und für Holunderblüten sowie Apfel Ethyl-2-Methylbutanoate, 1,8 Cineol und Linalool verwendet werden.

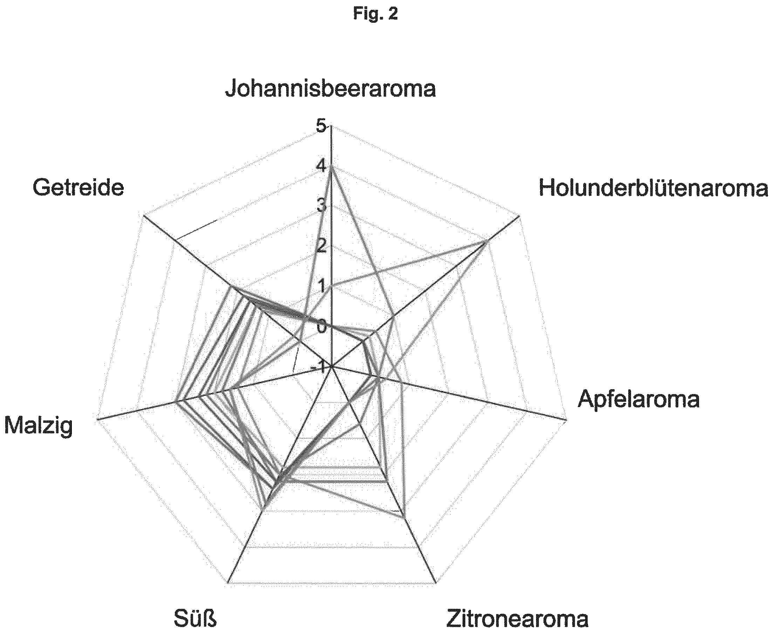

Um das Aroma in den Bieren bewerten zu können, wurden sensorische Analysen sowohl mit Malz als auch mit den fertigen Bieren durchgeführt. Für die Malzproben wurden die Attribute körnig, malzig, süß, Limettenaroma, Apfelaroma, Holunderblütenaroma und Johannisbeeraroma in einem modifizierten quantitativ-deskriptiven Analyseschema (QDA) bewertet (Fig. 2). Für die Bierproben wurde ein Bierschema der Deutschen Landwirtschafts-Gesellschaft (DLG) angewandt, um den Einfluss der Aromamalze auf die Qualität der fertigen Biere zu untersuchen, gefolgt von einem modifizierten QDA-Schema (Attribute Zitronenaroma, Apfelaroma, Holunderblütenaroma und Johannisbeeraroma), um ihren Einfluss speziell auf das Aroma und den resultierenden Geschmack der Biere zu bewerten (Tabelle 18). Im QDA-Schema wurden die Attribute von 0 bis 5 bewertet (0 = nicht vorhanden, 1 = schwacher Eindruck, 5 = starker Eindruck). Fig. 2 veranschaulicht die Ergebnisse der sensorischen Analyse der Biere.

Die Erfindung zeichnet sich durch ein Verfahren zur Herstellung von Malz aus Getreidekörnern, insbesondere Gerstenkörnern, umfassend zumindest die Verfahrensschritte Weichen Keimen und Darren der Getreidekörner, aus, wobei die Getreidekörner nach dem Keimen angetrocknet werden, wobei die gekeimten Getreidekörner in der Antrocknung auf einen Weichgrad W° mit W° ≤ 26 % eingestellt und sodann vor dem Darren einer aromatisierten Flüssigkeit ausgesetzt werden.

Kennzeichnend für die Erfindung ist auch, dass die gekeimten Getreidekörner in der Antrocknung auf einen Weichgrad W° mit W° ≤ 22 % eingestellt werden. Vorzugsweise liegt der Weichgrad W° zwischen 18 % und 25 %.

Die Erfindung zeichnet sich des Weiteren dadurch aus, dass die Getreidekörner während des Keimens auf einen Weichgrad W° mit 40 % ≤ W° ≤ 45 %, insbesondere 41 % ≤ W° ≤ 44 %, bevorzugterweise 42 % ≤ W° ≤ 44 %, eingestellt werden.

Kennzeichnend für die Erfindung ist auch, dass die gekeimten Getreidekörner der aromatisierten Lösung ausgesetzt werden, wenn der Eiweißlösungsgrad im Bereich zwischen 38 % und 46 %, insbesondere zwischen 41 % und 44 %, liegt.

Die Erfindung zeichnet sich ferner dadurch aus, dass das Antrocknen über eine Zeit t mit 9 h ≤ t ≤ 13 h, insbesondere 10 h ≤ t ≤ 11 h, vorzugsweise bei einer Temperatur T mit 38 °C ≤ T ≤ 42 °C, insbesondere T = 40 °C oder T ≈ 40 °C durchgeführt wird.

Die Erfindung ist auch dadurch gekennzeichnet, dass das Nachweichen bis zu einem Weichgrad W° zwischen 40 % und 45 %, insbesondere zwischen 41 % und 44 %, bevorzugterweise zwischen 42 % und 44 % erfolgt.

Auch zeichnet sich die Erfindung dadurch aus, dass das Weichen in der aromatisierten Lösung bei vorzugsweise Raumtemperatur, insbesondere im Bereich von 18 °C bis 24 °C, durchgeführt wird, wobei das Weichen (Nachweichen) über eine Zeit t 1 h ≤ t ≤ 12 h, mit insbesondere 4 h ≤ t ≤ 8 h, besonders bevorzugt 5 h ≤ t ≤ 7 h, erfolgt.

Ferner zeichnet sich die Erfindung dadurch aus, dass das Antrocknen erfolgt, nachdem die Getreidekörner über d Tage gekeimt haben mit d ≥ 4, bevorzugterweise d = 5 oder d ≥ 5.

Auch ist die Erfindung dadurch gekennzeichnet, dass als die aromatisierte Flüssigkeit aus einer Mischung von Wasser und zumindest einem Aroma, insbesondere aus der Gruppe Frucht- und/oder Gewürzessenz oder -saft, besteht oder diese enthält.

Ferner zeichnet sich die Erfindung dadurch aus, dass als Frucht zumindest eine aus der Gruppe Zitrone, Limone, Apfelsine, Grapefruit, Orange, Aprikose, Mandarine, Apfel, Ananas, Johannisbeere, Holunderblüten und/oder als Gewürz zumindest eines aus der Gruppe Kardamom, Chili, Piment, Nelke verwendet wird.

Insbesondere ist Gegenstand der Erfindung ein Verfahren zur Herstellung von Malz aus Getreidekörnern, umfassend die Verfahrensschritte:
- Weichen,
- Keimen,
- Antrocknen der gekeimten Getreidekörner bis zu einem Weichgrad W° mit W° ≤ 26 %, vorzugsweise 18° ≤ W° ≤ 25°,
- Weichen in einer aromatisierten Flüssigkeit, vorzugsweise aromatisiert mit einem Früchte- und/oder Gemüsearoma,
- Darren,
- Entkeimung.

Ein weiterer Gegenstand der Erfindung ist auch die Herstellung eines Getränks, insbesondere Bier, unter Verwendung eines Malzes hergestellt unter Berücksichtigung zuvor erläuterter Merkmale.

Gegenstand der Erfindung ist auch ein Malz hergestellt nach Verfahrensschritten zuvor erläuterter Art.

## Patentansprüche

1. Verfahren zur Herstellung von Malz aus Getreidekörnern, insbesondere Gerstenkörnern, umfassend zumindest die Verfahrensschritte Weichen (12, 16), Keimen (20) und Darren (26) der Getreidekörner,
**dadurch gekennzeichnet,**
**dass** die gekeimten Getreidekörner angetrocknet werden, wobei die gekeimten Getreidekörner in der Antrocknung (22) auf einen Weichgrad W° mit W° ≤ 26 % eingestellt werden, anschließend in einer aromatisierten Flüssigkeit geweicht und sodann gedarrt werden.

2. Verfahren nach Anspruch 1,
**dadurch gekennzeichnet,**
**dass** die aromatisierte Flüssigkeit aus einer Mischung von Wasser und zumindest einem Aroma aus der Gruppe Frucht- und/oder Gewürzessenz oder -saft, besteht oder diese enthält.

3. Verfahren nach Anspruch 1,
**dadurch gekennzeichnet,**
**dass** die gekeimten Getreidekörner in der Antrocknung (22) auf einen Weichgrad W° mit W° ≤ 22 %, eingestellt werden.

4. Verfahren nach Anspruch 1,
**dadurch gekennzeichnet,**
**dass** die gekeimten Getreidekörner in der Antrocknung (22) auf einen Weichgrad W° mit W° 18 % ≤ W° ≤ 25 %, eingestellt werden.

5. Verfahren nach zumindest einem der vorhergehenden Ansprüche,
**dadurch gekennzeichnet,**
**dass** die Getreidekörner während des Keimens auf einen Weichgrad W° mit 40 % ≤ W° ≤ 45 %, insbesondere 41 % ≤ W° ≤ 44 %, bevorzugterweise 42 % ≤ W° ≤ 44 %, eingestellt werden.

6. Verfahren nach zumindest einem der vorhergehenden Ansprüche,
**dadurch gekennzeichnet,**
**dass** die gekeimten Getreidekörner der aromatisierten Lösung ausgesetzt werden, wenn der Eiweißlösungsgrad im Bereich zwischen 38 % und 46 %, insbesondere zwischen 41 % und 44 %, liegt.

7. Verfahren nach zumindest einem der vorhergehenden Ansprüche,
**dadurch gekennzeichnet,**
**dass** das Antrocknen (22) über eine Zeit t mit 9 h ≤ t ≤ 13 h, insbesondere 10 h ≤ t ≤ 11 h, vorzugsweise bei einer Temperatur T mit 38 °C ≤ T ≤ 42 °C, insbesondere T = 40 °C oder T ≈ 40 °C durchgeführt wird.

8. Verfahren nach zumindest einem der vorhergehenden Ansprüche,
**dadurch gekennzeichnet,**
**dass** das Weichen (24) in der aromatisierten Lösung bei Raumtemperatur, insbesondere im Bereich von 18 °C bis 24 °C, durchgeführt wird.

9. Verfahren nach zumindest einem der vorhergehenden Ansprüche,
**dadurch gekennzeichnet,**
**dass** das Weichen (24) in der aromatisierten Lösung (Nachweichen) über eine Zeit t mit 1 h ≤ t ≤ 12 h, insbesondere 4 h ≤ t ≤ 8 h, bevorzugt 5 h ≤ t ≤ 7 h, erfolgt.

10. Verfahren nach zumindest einem der vorhergehenden Ansprüche,
**dadurch gekennzeichnet,**
**dass** das Nachweichen bis zu einem Weichgrad W° zwischen 40 % und 45 %, insbesondere zwischen 41 % und 44 %, bevorzugterweise zwischen 42 % und 44 % erfolgt.

11. Verfahren nach zumindest einem der vorhergehenden Ansprüche,
**dadurch gekennzeichnet,**
**dass** das Antrocknen (22) erfolgt, nachdem die Getreidekörner über d Tage gekeimt haben mit d ≥ 4, bevorzugterweise d = 5 oder d ≥ 5.

12. Verfahren nach zumindest einem der vorhergehenden Ansprüche,
**dadurch gekennzeichnet,**
**dass** als Frucht zumindest eine aus der Gruppe Zitrone, Limone, Apfelsine, Grapefruit, Orange, Aprikose, Mandarine, Apfel, Ananas, Johannisbeere, Holunderblüten und/oder als Gewürz zumindest eines aus der Gruppe Kardamom, Chili, Piment, Nelke verwendet wird.

13. Verfahren zur Herstellung von Malz aus Getreidekörnern nach Anspruch 1, umfassend die Verfahrensschritte:
- Weichen (12, 14),
- Keimen (20),
- Antrocknen (22) der gekeimten Getreidekörner bis zu einem Weichgrad W° mit W° ≤ 26 %, vorzugsweise 18° ≤ W° ≤ 25°,
- Weichen (20) in einer aromatisierten Flüssigkeit, vorzugsweise aromatisiert mit einem Früchte- und/oder Gemüsearoma,
- Darren (26),
- Entkeimung.

14. Herstellung eines Getränks, insbesondere Bier, unter Verwendung eines Malzes hergestellt nach zumindest einem der Ansprüche 1 bis 12.

## Claims

1. A method for producing malt from cereal grains, in particular from barley grains, comprising at least the method steps of steeping (12, 16), germinating (20) and kilning (26)w of the cereal grains,
**characterized in**
**that** the germinated cereal grains are interim-dried, wherein the germinated cereal grains are set in the interim drying (22) method step to a degree of steeping W° where W° ≤ 26 %, subsequently steeped in a flavored liquid and then kilned.

2. The method according to claim 1,
**characterized in**
**that** the flavored liquid consists of or contains a mix of water and at least one flavor from the group of fruit and/or of spice essence or juice.

3. The method according to claim 1,
**characterized in**
**that** the germinated cereal grains are set in the interim drying (22) method step to a degree of steeping W° where W° ≤ 22 %.

4. The method according to claim 1,
**characterized in**
**that** the germinated cereal grains are set in the interim drying (22) method step to a degree of steeping W° where W° 18 % ≤ W° ≤ 25 %.

5. The method according to at least one of the preceding claims,
**characterized in**
**that** the cereal grains are set during the germinating method step to a degree of steeping W° where 40 % ≤ W° ≤ 45 %, in particular 41 % ≤ W° ≤ 44 %, preferably 42 % ≤ W° ≤ 44 %.

6. The method according to at least one of the preceding claims,
**characterized in**
**that** the germinated cereal grains are subjected to the flavored solution when the degree of protein modification is in the range between 38 % and 46 %, in particular between 41 % and 44 %.

7. The method according to at least one of the preceding claims,
**characterized in**
**that** interim drying (22) is performed over a time t of 9 h ≤ t ≤ 13 h, in particular 10 h ≤ t ≤ 11 h, preferably at a temperature T of 38 °C ≤ T ≤ 42 °C, in particular T = 40 °C or T ≈ 40 °C.

8. The method according to at least one of the preceding claims,
**characterized in**
**that** steeping (24) in the flavored solution is performed at room temperature, in particular in the range from 18 °C to 24 °C.

9. The method according to at least one of the preceding claims,
**characterized in**
**that** steeping (24) in the flavored solution (secondary steeping) takes place over a time t of 1 h ≤ t ≤ 12 h, in particular 4 h ≤ t ≤ 8 h, preferably 5 h ≤ t ≤ 7 h.

10. The method according to at least one of the preceding claims,
**characterized in**
**that** secondary steeping takes place up to a degree of steeping W° of between 40 % and 45 %, in particular between 41 % and 44 %, preferably between 42 % and 44 %.

11. The method according to at least one of the preceding claims,
**characterized in**
**that** interim drying (22) takes place after the cereal grains have germinated over d days where d ≥ 4, preferably d = 5 or d ≥ 5.

12. Method according to at least one of the preceding claims,
**characterized in**
**that** at least one from the group of lemon, lime, grapefruit, orange, apricot, mandarin, apple, pineapple, currant, elderflower is used as the fruit and/or at least one from the group of cardamom, chili, pimento pepper, cloves as the spice.

13. The method for producing malt from cereal grains according to claim 1, comprising the method steps:
- steeping (12, 14),
- germinating (20),
- interim drying (22) of the germinated cereal grains up to a degree of steeping W° where W° ≤ 26 %, preferably 18° ≤ W° ≤ 25°,
- steeping (20) in a flavored liquid, preferably flavored with a fruit and/or vegetable flavor,
- kilning (26),
- deculming.

14. Producing a beverage, in particular beer, using a malt produced according to at least one of claims 1 to 12.

## Revendications

1. Procédé de production de malt à partir de grains de céréales, notamment de grains d'orge, comprenant au moins les étapes de procédé suivantes : trempe (12, 16), germination (20) et touraillage (26) des grains de céréales,
**caractérisé en ce**
**que** les grains de céréales germés sont séchés, sachant que les grains de céréales germés sont réglés dans le séchage (22) sur un degré d'humidité W° tel que W° ≤ 26 %, puis trempé dans un liquide aromatisé et ensuite touraillé.

2. Procédé selon la revendication 1,
**caractérisé en ce**
**que** le liquide aromatisé se compose d'un mélange d'eau et d'au moins un arôme appartenant au groupe des essences ou jus de fruits et/ou d'épices ou contient ceux-ci.

3. Procédé selon la revendication 1,
**caractérisé en ce**
**que** les grains de céréales germés sont réglés dans le séchage (22) sur un degré d'humidité W° tel que W° ≤ 22 %.

4. Procédé selon la revendication 1,
**caractérisé en ce**
**que** les grains de céréales germés sont réglés dans le séchage (22) sur un degré d'humidité W° tel que 18 % ≤ W° ≤ 25 %.

5. Procédé selon au moins l'une des revendications précédentes,
**caractérisé en ce**
**que** les grains de céréales sont réglés pendant la germination sur un degré d'humidité W° tel que 40 % ≤ W° ≤ 45 %, notamment 41 % ≤ W° ≤ 44 %, de préférence 42 % ≤ W° ≤ 44 %.

6. Procédé selon au moins l'une des revendications précédentes,
**caractérisé en ce**
**que** les grains de céréales germés sont exposés à la solution aromatisée quand le degré de la modification des protéines se situe dans la plage comprise entre 38 % et 46 %, notamment entre 41 % et 44 %.

7. Procédé selon au moins l'une des revendications précédentes,
**caractérisé en ce**
**que** le séchage (22) est réalisé pendant une durée t telle que 9 h ≤ t ≤ 13 h, notamment 10 h ≤ t ≤ 11 h, de préférence à une température T telle que 38 °C ≤ T ≤ 42 °C, notamment T = 40 °C ou T ≈ 40 °C.

8. Procédé selon au moins l'une des revendications précédentes,
**caractérisé en ce**
**que** la trempe (24) dans la solution aromatisée est réalisée à température ambiante, notamment sur la plage comprise entre 18 °C et 24 °C.

9. Procédé selon au moins l'une des revendications précédentes,
**caractérisé en ce**
**que** la trempe (24) dans la solution aromatisée (seconde trempe) a lieu pendant une durée t telle que 1 h ≤ t ≤ 12 h, notamment 4 h ≤ t ≤ 8 h, de préférence 5 h ≤ t ≤ 7 h.

10. Procédé selon au moins l'une des revendications précédentes,
**caractérisé en ce**
**que** la seconde trempe a lieu jusqu'à un degré d'humidité W° compris entre 40 % et 45 %, notamment entre 41 % et 44 %, de préférence entre 42 % et 44 %.

11. Procédé selon au moins l'une des revendications précédentes,
**caractérisé en ce**
**que** le séchage (22) a lieu après que les grains de céréales ont germé pendant d jours avec d ≥ 4, de préférence d = 5 ou d ≥ 5.

12. Procédé selon au moins l'une des revendications précédentes,
**caractérisé en ce**
**que** sont utilisés comme fruits au moins un fruit appartenant au groupe des citron, citron vert, pamplemousse, orange, abricot, mandarine, pomme, ananas, groseille, fleurs de sureau et/ou comme épices au moins une épice appartenant au groupe des cardamome, poudre de chili, piment, clou de girofle.

13. Procédé de production de malt à partir de grains de céréales selon la revendication 1, comprenant les étapes suivantes :
- trempe (12, 14),
- germination (20),
- séchage (22) des grains de céréales germés jusqu'à un degré d'humidité W° tel que W° ≤ 26 %, de préférence 18° ≤ W° ≤ 25°,
- trempe (20) dans un liquide aromatisé, de préférence aromatisé avec un arôme de fruits et/ou de légumes,
- touraillage (26),
- dégermage.

14. Production d'une boisson, notamment de bière, en utilisant un malt selon au moins l'une des revendications 1 à 12.
